# EUROPEAN PATENT SPECIFICATION

(11) **EP 2 164 250 B1**
(45) Date of publication and mention of the grant of the patent: **02.11.2011**
(21) Application number: 09165348.5
(22) Date of filing: 13.07.2009
(51) Int. Cl.: H04N 5/445

(54) **Broadcast receiver for displaying explanation of terminology included in digital caption and method for processing digital caption using the same**
Rundfunkempfänger zur Anzeige von Erklärungen zu Begriffen in digitalen Untertiteln und Verfahren zur Verarbeitung der digitalen Untertitel damit
Récepteur de diffusion pour afficher des explications sur les termes inclus dans un sous-titre numérique et procédé de traitement du sous-titre numérique l'utilisant

(30) Priority: 10.09.2008 KR 20080089305
(43) Date of publication of application: 17.03.2010
(73) Proprietor: Samsung Electronics Co., Ltd., Gyeonggi-do 442-742 (KR)
(72) Inventor: Yoon, Yeo-ri, Gyeonggi-do (KR); Kwon, Yong-hwan, Gyeonggi-do (KR); Lee, Sang-hee, Seoul (KR); Lee, Jeong-yeon, Gyeonggi-do (KR); Park, Mi-ju, Seoul (KR); Kim, Won-il, Gyeonggi-do (KR); Hwang, Woo-seok, Seoul (KR)
(74) Representative: Brandon, Paul Laurence

(56) References cited:
- US-A1- 2002 067 428
- US-A1- 2005 168 640
- US-A1- 2008 166 106
- US-B1- 6 816 201

## Description

### CROSS-REFERENCE TO RELATED APPLICATIONS

This application claims priority from Korean Patent Application No. 10-2008-0089305, filed on September 10, 2008 in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a broadcast receiver and a method for processing a digital caption using the same, and more particularly, to a broadcast receiver for displaying an explanation of terminology in a digital caption, and a method for processing a digital caption using the same.

### 2. Description of the Related Art

People have access to a diverse range of information via television (TV). For example, people may hear about diverse technical fields on the news and view sports on the TV.

While watching the TV, users may not understand technical terminology used by news anchors or sports commentators. In this case, users may ignore the unknown terms or look up the terms on the dictionary.

If coined words or technical terms appear while a user is watching the TV, the user must inconveniently look up the words in a dictionary so as to understand the words.

US 2002/067428 discloses a broadcast receiver and method for processing a digital caption according to the pre-characterising portions of claims 1 and 9 herein, respectively.

Therefore, there is a need for methods for users to know the meaning of technical terms on the TV with greater ease and convenience.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a broadcast receiver which searches for an explanation of terminology and displays the explanation of the terminology on a screen if the terminology in the digital caption information is included in a list of terminology to be explained, and a method for processing a digital caption using the same, so that users can easily understand the meaning of the terminology used in a broadcast program.

According to an exemplary aspect of the present invention, there is provided a broadcast receiver comprising: a broadcast reception unit which receives a broadcast signal containing digital caption information; a storage unit which stores a list of terminologies; a control unit which searches for an explanation of a terminology to be explained if the terminology to be explained, in the digital caption information is included in the list of terminologies; and a display unit which displays the explanation of the terminology to be explained, on a screen; **characterised in that**: the broadcast reception unit receives electronic program guide (EPG) information together with the digital caption information, the control unit extracts information on a title of a currently viewed broadcast program or information on a genre of the currently viewed broadcast program from the EPG information, and searches for the explanation of the terminology to be explained corresponding to the extracted information on the title or the genre of the currently viewed broadcast program; wherein the storage unit stores a plurality of lists of terminologies, which are categorized, and the control unit selects a list of terminologies corresponding to the extracted information on the title or the genre of the currently viewed broadcast program, from among the plurality of lists of terminologies, and searches for the explanation of the terminology to be explained if the terminology to be explained in the digital caption information is included in the selected list of terminologies.

According to another exemplary aspect of the present invention, there is provided a method for processing a digital caption for a broadcast receiver, the method comprising: storing a list of terminologies; receiving a broadcast signal containing digital caption information; searching for an explanation of a terminology to be explained if the terminology to be explained, in the digital caption information is included in the list of terminologies; and displaying the explanation of the terminology to be explained, on a screen; characterised by: receiving electronic program guide (EPG) information; and extracting information on a title of a currently viewed broadcast program or information on_a genre of the currently viewed broadcast program from the EPG information, wherein in the searching operation, the explanation of the terminology to be explained corresponding to the extracted information on the title or the genre of the currently viewed broadcast program is searched for; selecting a list of terminologies corresponding to the extracted information on the title or the genre of the currently viewed broadcast program, from among a plurality of lists of terminologies, wherein in the storing operation, the plurality of lists of terminologies are categorized in a categorization and stored according to the categorization, and in the searching operation, if the terminology to be explained in the digital caption information is included in the selected list of terminologies, the explanation of the terminology to be explained is searched for.

Further features of the present invention are set out in the appended claims.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a schematic block diagram of a television according to an exemplary embodiment of the present invention;

FIGS. 2A and 2B are a flowchart of a method for processing a digital caption according to an exemplary embodiment of the present invention;

FIG. 3A illustrates terminology to be explained in a digital caption using bold type according to an embodiment of the present invention;

FIG. 3B illustrates terminology to be explained in a digital caption in a boxed form according to another embodiment of the present invention;

FIG. 4 illustrates a screen displaying an explanation of terminology to be explained according to an embodiment of the present invention;

FIG. 5 illustrates a screen displaying terminology to be explained when a digital caption is not displayed according to an embodiment of the present invention; and

FIG. 6 illustrates a screen displaying terminology to be explained when a digital caption is not displayed according to another embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

A broadcast receiver is a device to tune to a broadcast signal received from a broadcasting station, and demodulate and display the broadcast signal. Examples of the broadcast receiver include televisions (TVs) and set-top boxes. Hereinbelow, a television is described as an example of a broadcast receiver.

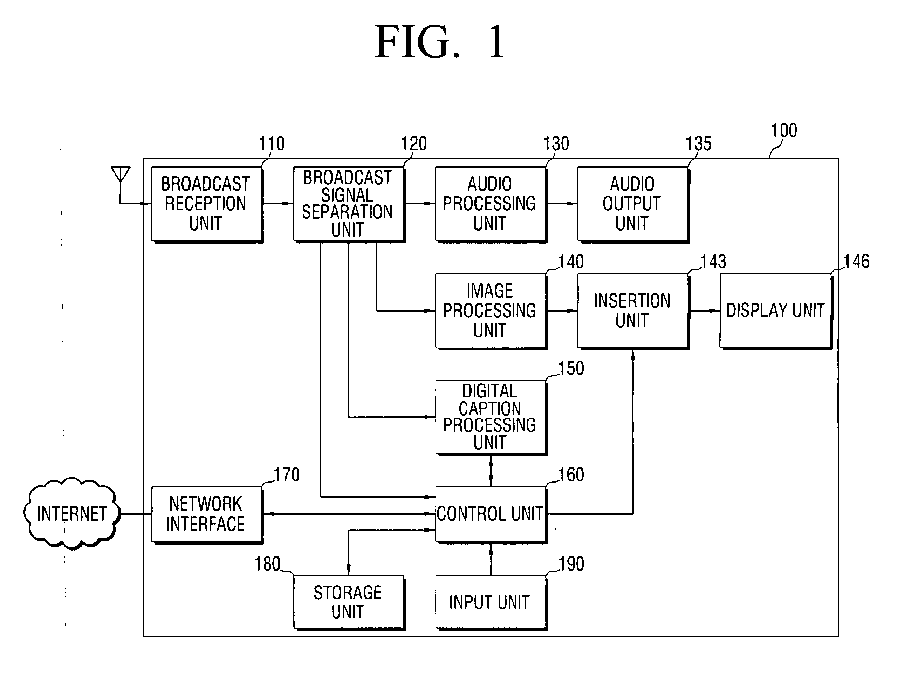

FIG. 1 is a schematic block diagram of a TV 100 according to an exemplary embodiment of the present invention. As illustrated in FIG. 1, the TV to may include a broadcast reception unit 110, a broadcast signal separation unit 120, an audio processing unit 130, an audio output unit 135, an image processing unit 140, an insertion unit 143, a display unit 146, a digital caption processing unit 150, a control unit 160, a network interface 170, a storage unit 180, and an input unit 190.

The broadcast reception unit 110 receives a broadcast from a broadcasting station or a satellite using a wired line or wirelessly, and demodulates the broadcast. The received broadcast signal may include electronic program guide (EPG) information and digital caption information.

The EPG information is information for a TV broadcast program guide to be displayed on the TV, including the title, genre, and broadcast time of the broadcast program.

The digital caption information indicates a digital caption received through the broadcast signal. A digital caption indicates text information containing a character's lines and sounds of a broadcast program as text on the screen. Such a digital caption enables a hearing-impaired person to view the TV. In addition, if a digital caption is displayed in a foreign language, the digital caption can be used for learning the language.

In general, caption broadcast schemes in a TV broadcast include open captions and closed captions. Open captions notify users of newsflashes or announcements according to the broadcaster's selection regardless of the user's selection by adding a caption signal to an active section of a TV signal. Closed captions display text together with broadcasts according to the user's selection if a caption signal is added to a non-active section of a TV signal, that is, a vertical blanking section, and received. In an exemplary embodiment in this specification, digital caption information indicates closed caption information.

The broadcast signal separation unit 120 separates an audio signal, a video signal, EPG information, and digital caption information from the demodulated broadcast signal. The broadcast signal separation unit 120 transmits the audio signal to the audio processing unit 130, transmits the video signal to the image processing unit 140, transmits the digital caption information to the digital caption processing unit 150, and transmits the EPG information to the control unit 160.

The audio processing unit 130 performs processing, such as audio decoding, on the audio signal. The audio processing unit 130 transmits the processed audio signal to the audio output unit 135.

The audio output unit 135 outputs the audio signal via a speaker.

The image processing unit 140 performs processing, such as video decoding and video scaling, on the input video signal, and outputs the processed video signal to the insertion unit 143.

The insertion unit 143 inserts text information received from the control unit 160, such as a digital caption, a marker indicating terminology to be explained, e.g., defined, and an explanation of the terminology, into the received video signal, and outputs an image including the text information to the display unit 146.

The display unit 146 displays the image output from the insertion unit 143. In particular, the display unit 146 displays an explanation of terminology to be explained, which is searched for by the control unit 160, on the screen.

The terminology to be explained is terminology which is included in a list of terminologies requiring an explanation, from among the terminology included in the digital caption information. That is, the terminology to be explained indicates terminology requiring explanation, such as a technical term or a coined word.

The terminology to be explained may include words, phrases, clauses, or sentences. For example, the terminology to be explained may be words such as "KOSPI" or "free throw", phrases or clauses such as "Fourier signal processing method", or sentences or proverbs such as "The early bird gets the worm".

The display unit 146 displays a digital caption on the screen. If the terminology in the digital caption information is included in the list of terminologies to be explained, the display unit 146 displays the terminology in the digital caption information differently from the remaining terminology on the screen. Subsequently, if the user inputs a command to display explanation of the terminology using the input unit 190, the display unit 146 displays the explanation of the terminology on the screen.

In addition, the display unit 146 may display the explanation of the terminology even when the digital caption is not displayed on the screen. More specifically, if the terminology in the digital caption information is included in the list of terminologies to be explained, the display unit 146 displays the terminology in the digital caption information differently from the remaining terminology on the screen.
For example, in the digital caption, the terminology to be explained may be displayed using bold type, a box, or an underline.

When the digital caption information is being displayed on the screen, if the user inputs a command to display an explanation of the terminology using the input unit 190, the display unit 146 displays the explanation of the terminology on the screen.

Alternatively, the display unit 146 may directly display an explanation of the terminology together with the terminology without displaying the terminology differently from the remaining terminology.

The display unit 146 may display an explanation of the terminology to be explained on screen, regardless of whether or not the digital caption is displayed on the screen.

The digital caption processing unit 150 decodes the received digital caption information into digital caption strings and outputs the decoded digital caption strings to the control unit 160.

The network interface 170 is a connection path to connect the TV 100 with the Internet. That is, the network interface 170 is communicably connected to the Internet.

The storage unit 180 stores the list of terminologies to be explained, so if terminology in the list is included in the digital caption information, the TV 100 displays explanation of the terminology on the screen.

The list of terminologies to be explained includes terminology which users may think are difficult. The list of terminologies to be explained may be stored when manufacturing the TV 100, or may be stored by the user. In addition, the list of terminologies to be explained may be edited by the user. That is, the user may add unknown terminology to the list and delete known terminology from the list.

In addition, the storage unit 180 may store explanations for a large amount of terminology. Explanations for the large amount of terminology may be stored in the form of a dictionary. Furthermore, the storage unit 180 may store a diverse range of dictionaries. For example, the storage unit 180 may store a dictionary of economic terms, a dictionary of sports terms, a dictionary of information technology terms, a dictionary of science terms, a Korean language dictionary, and an English language dictionary, explaining for the large amount of terminology.

However, the storage unit 180 may store only the list of terminologies to be explained without the explanations of the terminology. In this case, the explanations of the terminology may be searched for over the Internet.

The storage unit 180 may be implemented as a hard disk, a non-volatile memory, or the like.

The input unit 190 receives the user's manipulation and transmits information on the user's manipulation to the control unit 160. The input unit 190 may include a remote control or buttons provided on the TV 100.

The control unit 160 recognizes a user command based on the user's manipulation received from the input unit 190, and controls the overall operation of the TV 100 according to the user command.

If terminology in the digital caption information is included in the list of terminologies to be explained, the control unit 160 searches for an explanation of the terminology to be explained.

If the storage unit 180 stores a plurality of lists of terminology to be explained, which are categorized to correspond to particular titles or genres, the control unit 160 extracts information on the title or genre of a currently viewed broadcast program from the EPG information, and selects a list corresponding to the extracted information on the title or genre from among the plurality of lists of terminology to be explained. Subsequently, if terminology in the digital caption information is included in the selected list, the control unit 160 searches for an explanation of the terminology.

For example, it is assumed that the storage unit 180 stores a list of economic terminologies, a list of basketball terminologies, and a list of handball terminologies, as lists of terminologies to be explained. If the title of the currently viewed broadcast program is "economic news", the genre of the program is "economy", so the control unit 160 selects the list of economic terminologies as a list of terminologies to be explained. Alternatively, if the title of the currently viewed broadcast program is "International handball game round of 16", the genre of the program is "sport" but the title of the program includes "handball", so the control unit 160 selects the list of handball terminologies as a list of terminologies to be explained.

If an explanation belonging to a genre which is not related to the currently viewed broadcast program is displayed, the user may feel inconvenience due to receiving unnecessary information. Accordingly, in order to prevent this matter, the control unit 160 selects a list of tenninologies to be explained corresponding to information on the title or genre of the currently viewed broadcast program.

The control unit 160 extracts information on the title or genre of the currently viewed broadcast program from the EPG information, and searches for an explanation of terminology to be explained corresponding to the extracted informations.

More specifically, if there are a plurality of explanations for a single term to be explained, the control unit 160 searches for an explanation corresponding to the information on the title or genre of a currently viewed broadcast program.

For example, it is assumed that a basketball game is currently being viewed and "free throw" is included in a digital caption. The terminology "free throw" is used in both basketball and handball, so an explanation of "free throw" in basketball should be displayed. In this case, the control unit 160 extracts "basketball" from information on the title of the currently viewed broadcast program and searches for the meaning of "free throw" in basketball.

In addition, if there are a plurality of dictionaries of terminology (for example, a dictionary of economic terms, a dictionary of sports terms, a dictionary of information technology terms, a dictionary of science terms, a Korean language dictionary, an English language dictionary, and so on) in the storage unit 180 or on the Internet, the control unit 160 automatically selects a dictionary corresponding to information on the title or genre of the currently viewed broadcast program from among the plurality of dictionaries of terminology, and searches for an explanation of the terminology from the selected dictionary.

For example, if the currently viewed broadcast program is economic news, the control unit 160 extracts "economy" from information on the genre of the currently viewed broadcast program and searches for the meaning of the terminology to be explained from the dictionary of economic terms.

As described above, the control unit 160 selects a dictionary (namely, a set of explanations of terminology to be explained) corresponding to the currently viewed broadcast program so that the TV 100 can display explanations of terminology with greater precision.

In this exemplary embodiment of the present invention, the control unit 160 automatically selects a dictionary corresponding to information on the title or genre of the currently viewed broadcast program, but it is also possible for the user to personally select a dictionary.

For example, if terminology to be explained is present in digital caption information of a currently viewed broadcast program, the control unit 160 may display a list of dictionaries available together with the terminology to be explained on the screen. If the user selects one of the list of dictionaries available using the input unit 190, the control unit 160 searches for an explanation of the terminology to be explained from the dictionary.

If the storage unit 180 stores explanations for a large amount of terminology (that is, a dictionary of terminology), the control unit 160 searches for an explanation of terminology to be explained from among the stored explanations.

In addition, the control unit 160 may search for an explanation of terminology to be explained on the Internet. Websites on the Internet to search for the terminology to be explained may include general portal sites and a site provided by the manufacturer of the TV 100. Websites on the Internet to search for the terminology to be explained may also be selected by the user.

If digital caption information includes terminology which is included in the list of terminologies to be explained, the control unit 160 may control only the terminology to be displayed on the screen. If a manipulation to display an explanation of the terminology is input using the input unit 190, the control unit 160 displays the explanation of the terminology on the screen.

However, if the digital caption information is displayed on the screen, the control unit 160 controls the terminology to be explained in the digital caption information to be displayed differently from the remaining terminology on the screen. For example, the terminology to be explained in the digital caption may be displayed using bold type, a box, or an underline. If a command to display an explanation of the terminology to be explained is input using the input unit 190, the control unit 160 displays the explanation of the terminology to be explained on the screen.

The control unit 160 may select dictionaries to be searched (for example, a dictionary of economic terms, a dictionary of sports terms, a dictionary of information technology terms, a dictionary of science terms, a Korean language dictionary, an English language dictionary, and so on) as search objects or exclude any of the dictionaries to be searched from the search objects. For example, the dictionary of economic terms may be selected as a search object, and the dictionary of sports terms may be excluded from the search objects.

In addition, each dictionary may sort explanations of terminology into simple explanations and detailed explanations. Accordingly, when searching for terminology to be explained, the control unit 160 may select one of the simple explanation and the detailed explanation.

The control unit 160 may search for detailed information on terminology to be explained in a digital caption over the Internet and provide the user with the detailed information found.

When displaying an explanation of terminology to be explained on the screen, the control unit 160 may adjust the transparency of the explanation to be displayed on the screen according to the user's settings. Consequently, the user may select whether to concentrate on the broadcast screen or the explanation of the terminology.

As described above, if terminology to be explained is present in digital caption information, the TV 100 according to the exemplary embodiment of the present invention automatically displays an explanation of the terminology. Therefore, the user can conveniently know the meaning of technical terminology used in a broadcast program without separate manipulation.

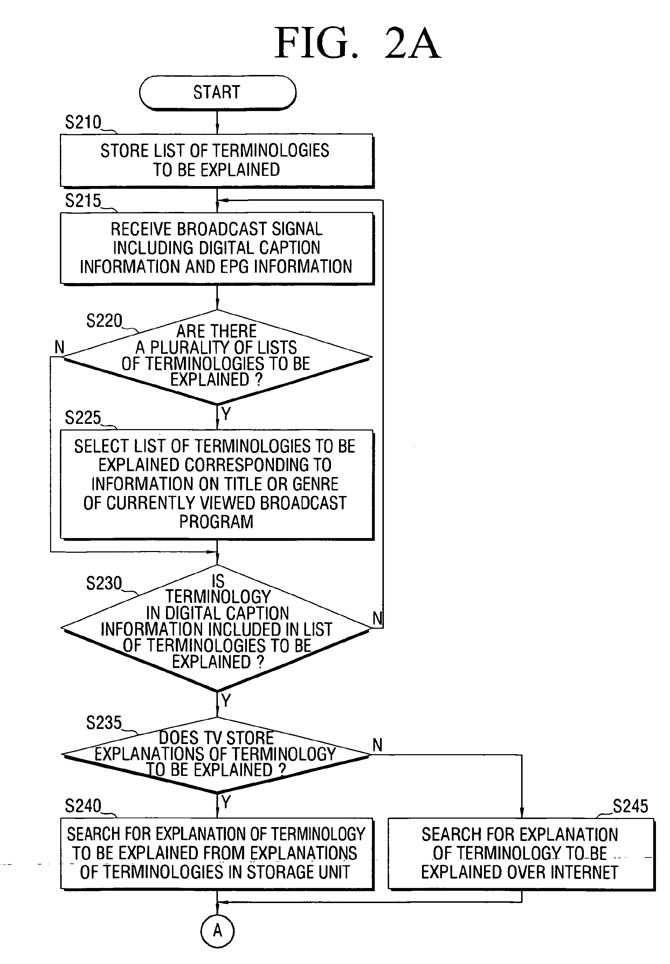

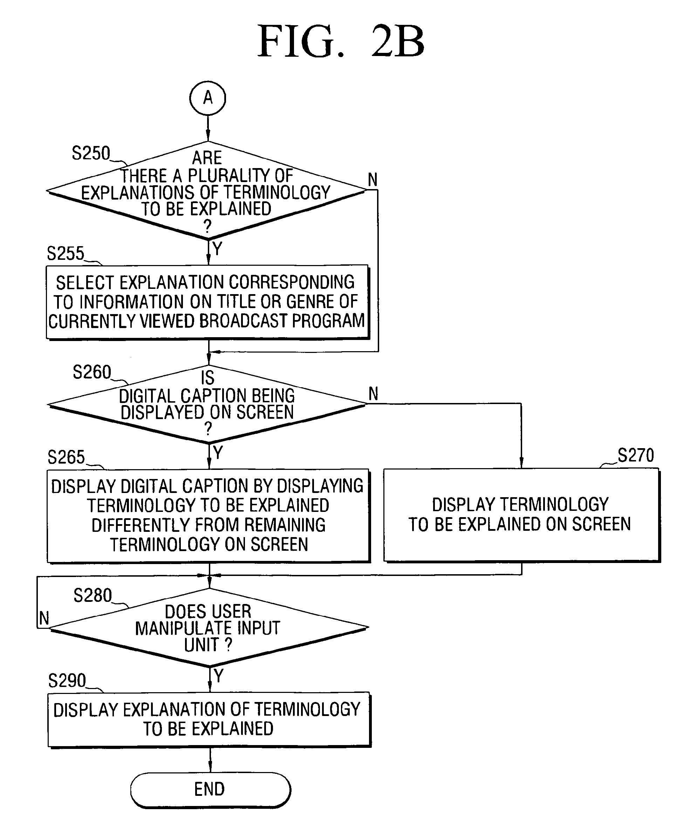

Hereinbelow, a method for displaying an explanation of terminology to be explained in a digital caption according to an exemplary embodiment of the present invention is described. FIGS. 2A and 2B are a flowchart of a method for processing a digital caption according to an exemplary embodiment of the present invention.

The TV 100 stores a list of terminologies to be explained in the storage unit 180 (S210), and receives a broadcast signal including digital caption information and EPG information (S215).

Subsequently, the TV 100 determines whether or not there are a plurality of lists of terminology to be explained (S220). If there are a plurality of lists of terminology to be explained (S220-Y), information on the title or genre of a currently viewed broadcast program is extracted, and a list of terminologies to be explained corresponding to the extracted information is selected from among the plurality of lists of terminology to be explained (S225).

For example, if the storage unit 180 stores a list of economic terminologies, a list of sports terminologies, and a list of information technology terminologies, and a currently viewed broadcast program is "economic news", the TV 100 selects the list of economic terminologies corresponding to the term "economy" included in information on the title or genre of the economic news.

Subsequently, the TV 100 determines whether or not terminology in the digital caption information is included in the selected list of terminologies to be explained (S230). If none of the terminology in the digital caption information is included in the selected list of terminologies to be explained (S230-N), the TV 100 continues to receive the digital caption information (S215).

If terminology in the digital caption information is included in the selected list of terminologies to be explained (S230-Y), the TV 100 identifies whether or not the storage unit 180 in the TV 100 stores explanations (that is, a dictionary) of the terminology to be explained (S235).

If the storage unit 180 stores explanations (that is, a dictionary) of the terminology to be explained (S235-Y), the TV 100 searches for explanation of the terminology to be explained from among the explanations of terminology in the storage unit 180 (S240).

If the storage unit 180 does not store explanations (that is, a dictionary) of the terminology to be explained (S235-N), the TV 100 searches for an explanation of the terminology to be explained over the Internet using the network interface 170 (S245).

Later, the TV 100 determines whether or not there are a plurality of explanations of the terminology to be explained (S250). If there are a plurality of explanations of the terminology to be explained (S250-Y), the TV 100 selects an explanation corresponding to information on the title or genre of the currently viewed broadcast program (S255).

For example, the terminology "free throw" is used in both basketball and handball. If the title of a currently viewed broadcast program is "basketball game" and terminology to be explained in a digital caption is "free throw", the TV 100 extracts "basketball" from the information on the title of the currently viewed broadcast program and searches for an explanation of "free throw" in basketball.

Subsequently, the TV 100 determines whether or not the digital caption is being displayed on the screen (S260). If the digital caption is being displayed on the screen (S260-Y), the TV 100 displays the terminology to be explained in the digital caption differently from the remaining terminology on the screen (S265). (For example, in the digital caption, the terminology to be explained may be displayed using bold type, a box, or an underline.)

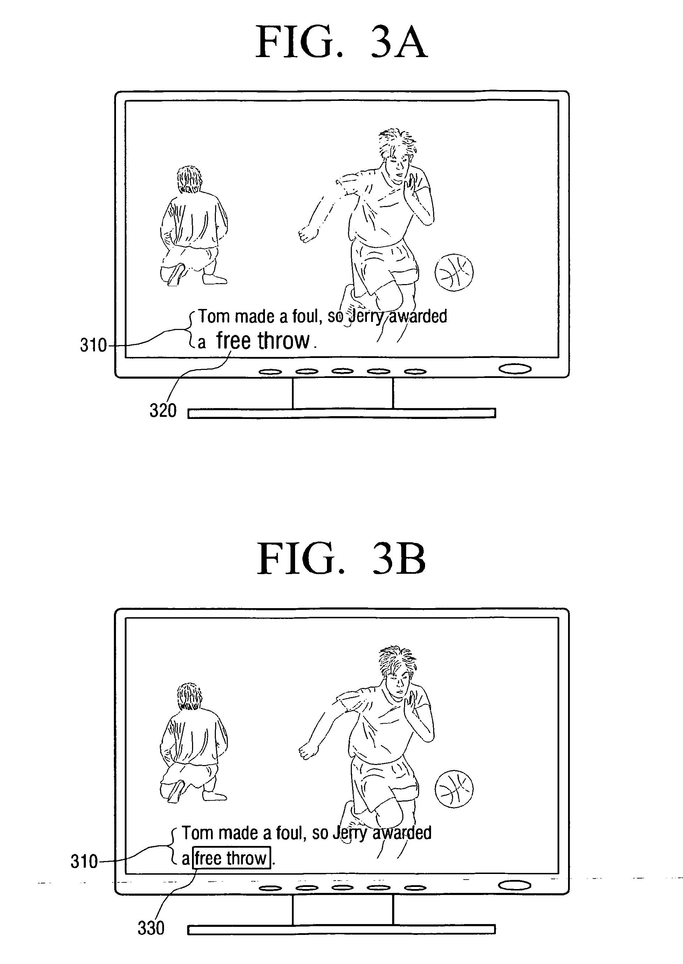

Displaying the terminology to be explained differently from the remaining terminology on the screen is described with reference to FIGS. 3A and 3B. FIG. 3A illustrates terminology to be explained in a digital caption using bold type according to an embodiment of the present invention.

As illustrated in FIG. 3A, the TV 100 is showing a digital caption 310. In FIG. 3A, "free throw" is the terminology to be explained 320 and thus is displayed using bold type.

FIG. 3B illustrates terminology to be explained in a digital caption in a boxed form according to another embodiment of the present invention.

In FIG. 3B, the TV 100 is showing a digital caption 310. In FIG. 3B, "free throw" is the terminology to be explained 330 and thus is displayed using a box.

In this manner, the TV 100 can display a digital caption and at the same time shows what the terminology to be explained is on the digital caption.

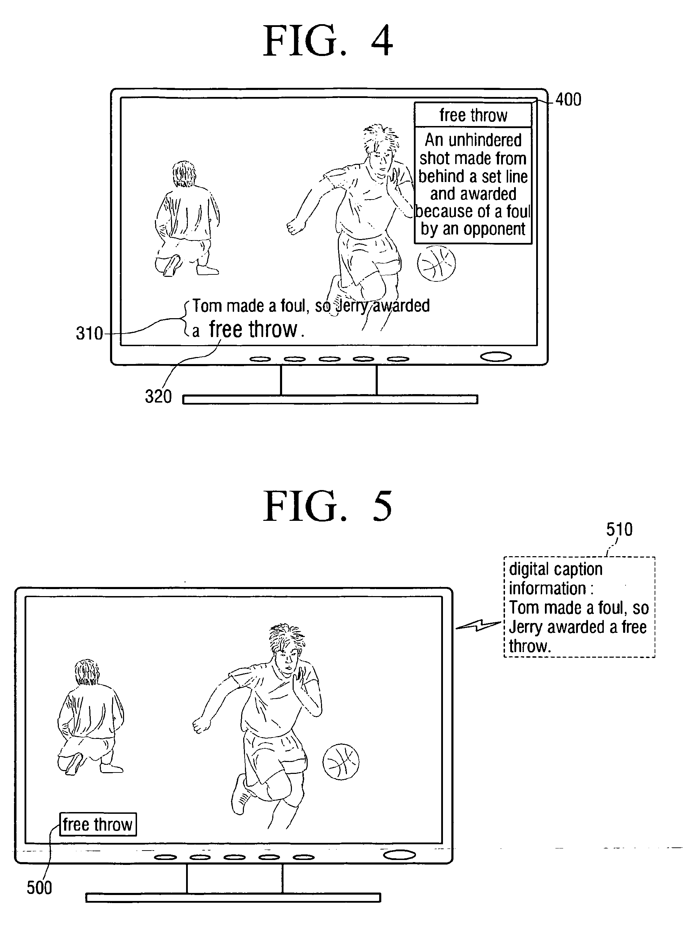

If the digital caption is not being displayed on the screen (S260-N), the TV 100 displays the terminology to be explained on the screen (S270). This is described here in detail with reference to FIG. 5.

FIG. 5 illustrates a screen displaying terminology to be explained when a digital caption is not displayed according to an embodiment of the present invention.

In FIG. 5, digital caption information 510 is received together with a broadcast signal but is not displayed on the screen. However, since "free throw" 500, the terminology to be explained, is included in the received digital caption information 510, only "free throw" 500 is displayed on the screen.

Subsequently, the TV 100 identifies whether or not the user manipulates the input unit 190 (S280). The input unit 190 includes a button to display an explanation of the terminology, so if the user presses the button, a command to display an explanation of the terminology is input.

Accordingly, if the user presses the button on the input unit 190 (S280-Y), the TV 100 displays an explanation of the terminology to be explained on the screen (S290).

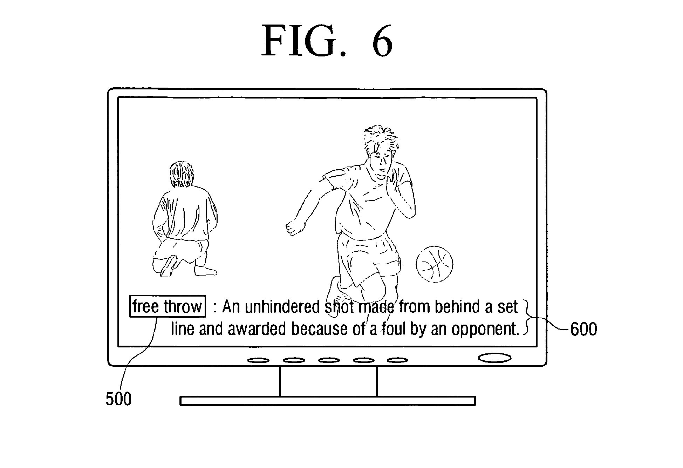

Methods for the TV 100 displaying an explanation of terminology to be explained are described in detail with reference to FIGS. 4 and 6.

FIG. 4 illustrates a screen displaying an explanation of terminology to be explained according to an embodiment of the present invention. In FIG. 4, a digital caption 310 is displayed and the terminology to be explained 320 is displayed.

As illustrated in FIG. 4, a separate window 400 for an explanation of the terminology to be explained 320 may be provided.

FIG. 6 illustrates a screen displaying terminology to be explained when a digital caption is not displayed according to another embodiment of the present invention.

When a digital caption is not displayed on the screen, the TV 100 displays only terminology 500 to be explained first as illustrated in FIG. 5. If the user presses the button to display an explanation of terminology 500 on the input unit 190, the explanation 600 of the terminology 500 to be explained is displayed next to the terminology 500 to be explained as illustrated in FIG. 6.

In the above exemplary embodiments of the present invention, a dictionary corresponding to information on the title or genre of a currently viewed broadcast program is selected automatically, but it is also possible for the user to personally select a dictionary.

For example, if terminology to be explained is present in digital caption information of a currently viewed broadcast program, the TV 100 may display a list of dictionaries available together with the terminology to be explained on the screen. Subsequently, the TV 100 searches for an explanation of the terminology to be explained from a dictionary selected by the user.

In the above exemplary embodiments of the present invention, terminology to be explained is displayed and then if the user presses a button to display an explanation of the terminology to be explained, the explanation of the terminology to be explained is displayed. However, it is also possible to directly display an explanation of the terminology to be explained together with the terminology.

That is, in FIG. 2B, operations S265, S270, and S280 are omitted, and operation S290 may be directly performed. In this case, if the TV 100 is displaying a digital caption (S260-Y), terminology to be explained and its explanation are displayed as illustrated in FIG. 4. Alternatively, if the TV 100 is not displaying a digital caption (S260-N), terminology to be explained and its explanation are displayed as illustrated in FIG. 6.

In the above exemplary embodiments of the present invention, the broadcast receiver is a TV, but the technical idea of the present invention can be applied to any kind of broadcast receiver capable of receiving a digital caption, such as a set-top box or a digital multimedia broadcasting (DMB) receiver.

As can be appreciated from the above description of the present invention, a broadcast receiver which searches for an explanation of terminology and displays explanation of the terminology on a screen if the terminology in the digital caption information is included in a list of terminologies to be explained, and a method for processing a digital caption using the same are provided. Accordingly, the user can easily understand the meaning of the terminology on a broadcast program.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A broadcast receiver (100) comprising:
a broadcast reception unit (110) which receives a broadcast signal containing digital caption information;
a storage unit (180) which stores a list of terminologies;
a control unit (160) which searches for an explanation of a terminology to be explained if the terminology to be explained, in the digital caption information is included in the list of terminologies; and
a display unit (146) which displays the explanation of the terminology to be explained, on a screen; **characterised in that**:
the broadcast reception unit (110) receives electronic program guide (EPG) information together with the digital caption information,
the control unit (160) extracts information on a title of a currently viewed broadcast program or information on a genre of the currently viewed broadcast program from the EPG information, and searches for the explanation of the terminology to be explained corresponding to the extracted information on the title or the genre of the currently viewed broadcast program;
wherein
the storage unit (180) stores a plurality of lists of terminologies, which are categorized, and
the control unit (160) selects a list of terminologies corresponding to the extracted information on the title or the genre of the currently viewed broadcast program, from among the plurality of lists of terminologies, and searches for the explanation of the terminology to be explained if the terminology to be explained in the digital caption information is included in the selected list of terminologies.

2. The broadcast receiver (100) according to claim 1, wherein the storage unit (180) stores explanations for terminologies of the list of terminologies, and
the control unit (160) searches for the explanation of the terminology to be explained from the explanations stored in the storage unit (180) if the terminology to be explained in the digital caption information is included in the list of terminologies.

3. The broadcast receiver (100) according to claim 1 or claim 2, further comprising:
a network interface (170) which is communicably connected to the Internet,
wherein the control unit (160) searches for the explanation of the terminology to be explained, over the Internet through the network interface (170) if the terminology to be explained in the digital caption information is included in the list of terminologies.

4. The broadcast receiver (100) according to any one of claims 1 to 3, wherein the display unit (146) displays the explanation for the terminology to be explained on the screen even when the digital caption information is not displayed on the screen.

5. The broadcast receiver (100) according to any one of-claims 1 to 4, further-comprising:
an input unit (190) which receives a user input,
wherein the display unit (146) displays the terminology to be explained on the screen if the terminology to be explained in the digital caption information is included in the list of terminologies, and displays the explanation of the terminology to be explained on the screen if a predetermined user input is input through the input unit (190) when the terminology to be explained is displayed on the screen.

6. The broadcast receiver (100) according to any one of claims 1 to 5, further comprising:
an input unit (190) which receives a user input,
wherein the display unit (146) displays the digital caption information on the screen by displaying the terminology to be explained in the digital caption information differently from remaining terminology on the screen if the terminology to be explained in the digital caption information is included in the list of terminologies, and displays the explanation of the terminology to be explained on the screen if a predetermined user input is input through the input unit (190) when the terminology to be explained is displayed on the screen.

7. The broadcast receiver (100) according to any one of claims 1 to 6, further comprising:
an input unit (190) which receives a user input,
wherein the display unit (146) displays a list of dictionaries on the screen if the terminology to be explained in the digital caption information is included in the list of terminologies, and
the control unit (160) searches for the explanation of the terminology to be explained from a dictionary selected through the input unit (190), from among the list of dictionaries.

8. The broadcast receiver (100) according to any one of claims 1 to 7, wherein the terminology to be explained comprises at least one of words, phrases, clauses, and sentences.

9. A method for processing a digital caption for a broadcast receiver (100), the method comprising:
storing a list of terminologies;
receiving a broadcast signal containing digital caption information;
searching for an explanation of a terminology to be explained if the terminology to be explained, in the digital caption information is included in the list of terminologies; and
displaying the explanation of the terminology to be explained, on a screen;
**characterised by**:
receiving electronic program guide (EPG) information; and
extracting information on a title of a currently viewed broadcast program or information on a genre of the currently viewed broadcast program from the EPG information,
wherein in the searching operation, the explanation of the terminology to be explained corresponding to the extracted information on the title or the genre of the currently viewed broadcast program is searched for;
selecting a list of terminologies corresponding to the extracted information on the title or the genre of the currently viewed broadcast program, from among a plurality of lists of terminologies,
wherein in the storing operation, the plurality of lists of terminologies are categorized in a categorization and stored according to the categorization, and
in the searching operation, if the terminology to be explained in the digital caption information is included in the selected list of terminologies, the explanation of the terminology to be explained is searched for.

10. The method according to claim 9, further comprising:
storing explanations for terminologies of the list of terminologies,
wherein in the searching operation, if the terminology to be explained, in the digital caption information is included in the list of terminologies, the explanation of the terminology to be explained is searched for from the stored explanations.

11. The method according to claim 9 or claim 10, further comprising:
being communicably connected to the Internet through a network interface (170),
wherein in the searching operation, if the terminology to be explained, in the digital caption information is included in the list of terminologies, the explanation of the terminology to be explained is searched for through the Internet.

## Patentansprüche

1. Rundfunkempfänger (100), der umfasst:
eine Rundfunkempfangseinheit (110), die ein Rundfunksignal empfängt, das digitale Bildschriftinformationen enthält;
eine Speichereinheit (180), die eine Terminologieliste speichert;
eine Steuereinheit (160), die nach einer Erläuterung einer zu erläuternden Terminologie sucht, falls die zu erläuternde Terminologie in den digitalen Bildschriftinformationen in der Terminologieliste enthalten ist; und
eine Anzeigeeinheit (146), die die Erläuterung der zu erläuternden Terminologie auf einem Bildschirm anzeigt; **dadurch gekennzeichnet, dass:**
die Rundfunkempfangseinheit (110) elektronische Programmführerinformationen (EPG-Informationen) zusammen mit den digitalen Bildschriftinformationen empfängt,
die Steuereinheit (160) Informationen über den Titel eines momentan betrachteten Rundfunkprogramms oder Informationen über ein Genre des momentan betrachteten Rundfunkprogramms aus den EPG-Informationen extrahiert und nach einer Erläuterung der zu erläuternden Terminologie, die den extrahierten Informationen über den Titel oder das Genre des momentan betrachteten Rundfunkprogramms entspricht, sucht;
wobei
die Speichereinheit (180) mehrere Terminologielisten speichert, die kategorisiert sind, und
die Steuereinheit (160) eine Terminologieliste, die den extrahierten Informationen über den Titel oder das Genre des momentan betrachteten Rundfunkprogramms entspricht, aus den mehreren Terminologielisten sucht und nach der Erläuterung der zu erläuternden Terminologieliste sucht, falls die in den digitalen Bildschriftinformationen zu erläuternde Terminologie in der ausgewählten Terminologieliste enthalten ist.

2. Rundfunkempfänger (100) nach Anspruch 1, wobei die Speichereinheit (180) Erläuterungen für Terminologien der Terminologieliste speichert und
die Steuereinheit (160) nach der Erläuterung der zu erläuternden Terminologie unter den in der Speichereinheit (180) gespeicherten Erläuterungen sucht, falls die zu erläuternde Terminologie in den digitalen Bildschriftinformationen in der Terminologieliste enthalten ist.

3. Rundfunkempfänger (100) nach Anspruch 1 oder Anspruch 2, der ferner umfasst:
eine Netzschnittstelle (170), die mit dem Internet kommunikationstechnisch verbunden ist,
wobei die Steuereinheit (160) nach der Erläuterung der zu erläuternden Terminologie im Internet über die Netzschnittstelle (170) sucht, falls die zu erläuternde Terminologie in den digitalen Bildschriftinformationen in der Terminologieliste enthalten ist.

4. Rundfunkempfänger (100) nach einem der Ansprüche 1 bis 3, wobei die Anzeigeeinheit (146) die Erläuterung der zu erläuternden Terminologie auf dem Bildschirm selbst dann anzeigt, wenn die digitalen Bildschriftinformationen nicht auf dem Bildschirm angezeigt werden.

5. Rundfunkempfänger (100) nach einem der Ansprüche 1 bis 4, der ferner umfasst:
eine Eingabeeinheit (190), die eine Anwendereingabe empfängt,
wobei die Anzeigeeinheit (146) die zu erläuternde Terminologie auf dem Bildschirm anzeigt, falls die zu erläuternde Terminologie in den digitalen Bildschriftinformationen in der Terminologieliste enthalten ist, und die Erläuterung der zu erläuternden Terminologie auf dem Bildschirm anzeigt, falls eine vorgegebene Anwendereingabe über die Eingabeeinheit (190) eingegeben wird, wenn die zu erläuternde Terminologie auf dem Bildschirm angezeigt wird.

6. Rundfunkempfänger (100) nach einem der Ansprüche 1 bis 5, der ferner umfasst:
eine Eingabeeinheit (190), die eine Anwendereingabe empfängt,
wobei die Anzeigeeinheit (146) die digitalen Bildschriftinformationen auf dem Bildschirm durch Anzeigen der zu erläuternden Terminologie in den digitalen Bildschriftinformationen auf andere Weise als die übrige Terminologie auf dem Bildschirm anzeigt, falls die zu erläuternde Terminologie in den digitalen Bildschriftinformationen in der Terminologieliste enthalten ist, und die Erläuterung der zu erläuternden Terminologie auf dem Bildschirm anzeigt, falls eine vorgegebene Anwendereingabe über die Eingabeeinheit (190) eingegeben wird, wenn die zu erläuternde Terminologie auf dem Bildschirm angezeigt wird.

7. Rundfunkempfänger (100) nach einem der Ansprüche 1 bis 6, der ferner umfasst:
eine Eingabeeinheit (190), die eine Anwendereingabe empfängt,
wobei die Anzeigeeinheit (146) eine Liste von Verzeichnissen auf dem Bildschirm anzeigt, falls die zu erläuternde Terminologie in den digitalen Bildschriftinformationen in der Terminologieliste enthalten ist, und
die Steuereinheit (160) nach der Erläuterung der zu erläuternden Terminologie in einem durch die Eingabeeinheit (190) aus der Liste von Verzeichnissen gewählten Verzeichnis sucht.

8. Rundfunkempfänger (100) nach einem der Ansprüche 1 bis 7, wobei die zu erläuternde Terminologie Wörter und/oder Schlagwörter und/oder Satzteile und/oder Sätze umfasst.

9. Verfahren zum Verarbeiten einer digitalen Bildschrift für einen Rundfunkempfänger (100), wobei das Verfahren umfasst:
Speichern einer Terminologieliste;
Empfangen eines Rundfunksignals, das digitale Bildschriftinformationen enthält;
Suchen nach einer Erläuterung einer zu erläuternden Terminologie, falls die zu erläuternde Terminologie in den digitalen Bildschriftinformationen in der Terminologieliste enthalten ist; und
Anzeigen der Erläuterung der zu erläuternden Terminologie auf einem Bildschirm,
**gekennzeichnet durch**:
Empfangen von elektronischen Programmführerinformationen (EPG-Informationen); und
Extrahieren von Informationen über einen Titel eines momentan betrachteten Rundfunkprogramms oder von Informationen über ein Genre des momentan betrachteten Rundfunkprogramms aus den EPG-Informationen,
wobei in dem Suchvorgang die Erläuterung der zu erläuternden Terminologie, die den extrahierten Informationen über den Titel oder das Genre des momentan betrachteten Rundfunkprogramms entspricht, gesucht wird;
Auswählen einer Terminologieliste, die den extrahierten Informationen über den Titel oder das Genre des momentan betrachteten Rundfunkprogramms entspricht, aus mehreren Terminologielisten,
wobei in dem Speichervorgang die mehreren Terminologielisten in einer Kategorisierung kategorisiert und in Übereinstimmung mit der Kategorisierung gespeichert werden und
in dem Suchvorgang dann, wenn die zu erläuternde Terminologie in den digitalen Bildschriftinformationen in der ausgewählten Terminologieliste enthalten ist, die Erläuterung der zu erläuternden Terminologie gesucht wird.

10. Verfahren nach Anspruch 9, das ferner umfasst:
Speichern von Erläuterungen für Terminologien der Terminologieliste,
wobei in dem Suchvorgang dann, wenn die zu erläuternde Terminologie in den digitalen Bildschriftinformationen in der Terminologieliste enthalten ist, die Erläuterung der zu erläuternden Terminologie unter den gespeicherten Erläuterungen gesucht wird.

11. Verfahren nach Anspruch 9 oder Anspruch 10, das ferner umfasst:
Vorsehen einer kommunikationstechnischen Verbindung mit dem Internet über eine Netzschnittstelle (170),
wobei in dem Suchvorgang dann, wenn die zu erläuternde Terminologie in den digitalen Bildschriftinformationen in der Terminologieliste enthalten ist, die Erläuterung der zu erläuternden Terminologie im Internet gesucht wird.

## Revendications

1. Récepteur de diffusion (100) comprenant:
- une unité de réception de diffusion (110) qui reçoit un signal de diffusion contenant des informations de légende numérique ;
- une unité de stockage (180) qui stocke une liste de terminologies ;
- une unité de commande (160) qui recherche une explication d'une terminologie à expliquer si la terminologie à expliquer, dans les informations de légende numérique, est comprise dans la liste des terminologies ; et
- une unité d'affichage (146) qui affiche l'explication de la terminologie à expliquer sur un écran ;
**caractérisé en ce que** :
- l'unité de réception de diffusion (110) reçoit des informations de guide de programmes électronique (EPG) en même temps que les informations de légende numérique ;
- l'unité de commande (160) extrait des informations sur un titre d'un programme de diffusion en cours de visualisation ou des informations sur un genre du programme de diffusion en cours de visualisation à partir des information EPG, et recherche l'explication de la terminologie à expliquer correspondant aux informations extraites sur le titre ou le genre du programme de diffusion en cours de visualisation ;
et dans lequel :
- l'unité de stockage (180) stocke une pluralité de listes de terminologies qui sont catégorisées ; et
- l'unité de commande (160) sélectionne une liste de terminologies correspondant aux informations extraites sur le titre ou le genre du programme de diffusion en cours de visualisation dans ladite pluralité de listes de terminologies, et recherche l'explication de la terminologie à expliquer si la terminologie à expliquer dans les informations de légende numérique est comprise dans la liste de terminologies sélectionnée.

2. Récepteur de diffusion (100) selon la revendication 1, dans lequel l'unité de stockage (180) stocke des explications des terminologies de la liste de terminologies, et l'unité de commande (160) recherche l'explication de la terminologie à expliquer dans les explications stockées dans l'unité de stockage (180) si la terminologie à expliquer dans les informations de légende numérique est comprise dans la liste des terminologies.

3. Récepteur de diffusion (100) selon la revendication 1 ou la revendication 2, comprenant en outre :
- une interface réseau (170) qui est connectée pour communication avec Internet ;
et dans lequel l'unité de commande (160) recherche une explication de la terminologie à expliquer sur Internet et par le biais de l'interface réseau (170) si la terminologie à expliquer dans les informations de légende numérique est comprise dans la liste des terminologies.

4. Récepteur de diffusion (100) selon l'une quelconque des revendications 1 à 3, dans lequel l'unité d'affichage (146) affiche l'explication de la terminologie à expliquer sur l'écran même lorsque les informations de légende numérique ne sont pas affichées sur l'écran.

5. Récepteur de diffusion (100) selon l'une quelconque des revendications 1 à 4, comprenant en outre :
- une unité d'entrée (190) qui reçoit une entrée d'utilisateur ;
et dans lequel l'unité d'affichage (146) affiche la terminologie à expliquer sur l'écran si la terminologie à expliquer dans les informations de légende numérique est comprise dans la liste des terminologies, et affiche l'explication de la terminologie à expliquer sur l'écran si une entrée d'utilisateur prédéterminée est entrée via l'unité d'entrée (190) lorsque la terminologie à expliquer est affichée sur l'écran.

6. Récepteur de diffusion (100) selon l'une quelconque des revendications 1 à 5, comprenant en outre :
- une unité d'entrée (190) qui reçoit une entrée d'utilisateur ;
et dans lequel l'unité d'affichage (146) affiche les informations de légende numérique sur l'écran en affichant la terminologie à expliquer dans les informations de légende numérique d'une manière différente de la terminologie restante sur l'écran si la terminologie à expliquer dans les informations de légende numérique est comprise dans la liste des terminologies, et affiche l'explication de la terminologie à expliquer sur l'écran si une entrée d'utilisateur prédéterminée est entrée via l'unité d'entrée (190) lorsque la terminologie à expliquer est affichée sur l'écran.

7. Récepteur de diffusion (100) selon l'une quelconque des revendications 1 à 6, comprenant en outre :
- une unité d'entrée (190) qui reçoit une entrée d'utilisateur ;
et dans lequel l'unité d'affichage (146) affiche une liste de dictionnaires sur l'écran si la terminologie à expliquer dans les informations de légende numérique est comprise dans la liste des terminologies, tandis que l'unité de commande (160) recherche l'explication de la terminologie à expliquer dans un dictionnaire sélectionné via l'unité d'entrée (190) dans la liste de dictionnaires.

8. Récepteur de diffusion (100) selon l'une quelconque des revendications 1 à 7, dans lequel la terminologie à expliquer comprend l'un au moins parmi des mots, des phrases, des propositions et des énoncés.

9. Procédé de traitement de légende numérique pour récepteur de diffusion (100), lequel procédé consiste à :
- stocker une liste de terminologies ;
- recevoir un signal de diffusion contenant des informations de légende numérique ;
- rechercher une explication d'une terminologie à expliquer si la terminologie à expliquer, dans les informations de légende numérique, est comprise dans la liste des terminologies ; et
- afficher l'explication de la terminologie à expliquer sur un écran ;
**caractérisé en ce qu'**il consiste à .
- recevoir des informations de guide de programmes électronique (EPG) ; et
- extraire des informations sur un titre du programme de diffusion en cours de visualisation ou des informations sur le genre du programme de diffusion en cours de visualisation à partir des informations EPG ;
dans lequel :
- lors de l'opération de recherche, l'explication de la terminologie à expliquer correspondant aux informations extraites sur le titre ou le genre du programme de diffusion en cours de visualisation est recherchée ;
- on sélectionne une liste de terminologies correspondant aux informations extraites sur le titre ou le genre du programme de diffusion en cours de visualisation dans ladite pluralité de listes de terminologies ;
et dans lequel :
- lors de l'opération de stockage, lesdites plusieurs listes de terminologies sont catégorisées dans une catégorisation et sont stockées en fonction de la catégorisation ; et
- lors de l'opération de recherche, si la terminologie à expliquer dans les informations de légende numérique est comprise dans la liste sélectionnée de terminologies, l'explication de la terminologie à expliquer est recherchée.

10. Procédé selon la revendication 9, consistant en outre à :
- stocker des explications des terminologies de la liste de terminologies ;
et dans lequel, lors de l'opération de recherche, si la terminologie à expliquer dans les informations de légende numérique est comprise dans la liste de terminologies, l'explication de la terminologie à expliquer est recherchée dans les explications stockées.

11. Procédé selon la revendication 9 ou la revendication 10, consistant en outre à :
- effectuer une connexion pour communication avec Internet via une interface réseau (170) ;
et dans lequel, lors de l'opération de recherche, si la terminologie à expliquer dans les informations de légende numérique est comprise dans la liste des terminologies, l'explication de la terminologie à expliquer est recherchée sur Internet.
